# DEMANDE DE BREVET EUROPEEN

(11) **EP 3 051 079 A1**
(43) Date de publication de la demande: **03.08.2016**
(21) Numéro de dépôt: 16305036.2
(22) Date de dépôt: 15.01.2016
(51) Int. Cl.: F01K 13/00, F22B 1/02, F22B 1/18

(54) **SYSTEME ET PROCEDE DE STOCKAGE D'ENERGIE SOUS FORME D'AIR COMPRIME DANS DES TUBES INTEGRES DANS UNE CUVE CONTENANT DE L'EAU ET DE LA VAPEUR D'EAU**

(30) Priorité: 02.02.2015 FR 1550786
(71) Demandeur: IFP Énergies nouvelles, 92852 Rueil-Malmaison Cedex (FR)
(72) Inventeur: WITTRISCH, Christian, 92500 RUEIL MALMAISON (FR); CONSTANT, Michel, 95160 MONTMORENCY (FR)

(57) **Abrégé**

La présente invention concerne un système et un procédé de stockage d'énergie sous forme d'air comprimé, constitué par un assemblage de tubes (1) connectés pour former un volume de stockage, l'assemblage étant confiné dans une cuve (2) isolante thermiquement et résistante à la pression. Le système de stockage selon l'invention comporte des moyens de stockage et de restitution de la chaleur de l'air comprimé afin d'augmenter l'efficacité du système de stockage.

## Description

Le domaine de la présente invention concerne le stockage d'énergie par air comprimé (CAES pour "Compressed Air Energy Storage"). L'invention porte sur un système optimisé pour le stockage de l'air.

Dans ce système, l'énergie, pouvant provenir d'électricité notamment issue de sources renouvelables, et que l'on souhaite utiliser à un autre moment que le moment de production, peut être stockée sous forme d'air comprimé. L'électricité produite en excès alimente donc un, ou plusieurs compresseurs dont le but est de comprimer une quantité d'air donné et de la stocker dans des réservoirs adaptés.

Il n'existe pas, à ce jour, de stockage local semi-massif d'air comprimé industriel, en réservoir artificiel (à la différence des stockages géologiques existants dans des cavités salines), entre 70 et 120 bars pour des volumes compris entre 1000 m³ et 30 000 m³ installés à terre, en surface ou sub-surface (ci-après désigné comme « mini CAES »).

De plus, dans les solutions actuelles, il n'est pas toujours possible de stocker l'énergie calorifique de l'air comprimé, ce qui constitue des pertes énergétiques des systèmes de stockage d'énergie.

Ainsi, la présente invention concerne un système de stockage d'énergie sous forme d'air comprimé, constitué par un assemblage de tubes connectés pour former un volume de stockage, l'assemblage étant confiné dans une cuve isolante thermiquement et résistante à la pression. Le système de stockage selon l'invention comporte des moyens de stockage et de restitution de la chaleur de l'air comprimé afin d'augmenter l'efficacité du système de stockage.

### Le système selon l'invention

L'invention concerne un système de stockage d'énergie sous forme d'air comprimé comprenant au moins un tube formant un volume de stockage, ledit tube étant confiné dans une cuve étanche, résistante à la pression et isolante thermiquement. Ledit système de stockage d'énergie sous forme d'air comprimé comporte des moyens de stockage et de restitution de la chaleur de l'air comprimé comprenant de l'eau et/ou de la vapeur d'eau.

Selon l'invention, ledit tube est en métal, notamment en acier.

Avantageusement, l'eau et la vapeur d'eau desdits moyens de stockage et de restitution de la chaleur occupent au moins partiellement l'espace interne de la cuve.

Selon un mode de réalisation de l'invention, ledit système de stockage comprend un assemblage de tubes connectés pour former le volume de stockage, ledit assemblage comprenant des tubes droits réunis en fagots et disposés en parallèle.

Alternativement, ledit système de stockage comprend un assemblage de tubes connectés pour former le volume de stockage, ledit assemblage étant agencé sous forme d'une bobine de tubes.

Selon un aspect de l'invention, ledit système de stockage est disposé en surface, ou est au moins partiellement enterré.

De manière avantageuse, lesdits tubes sont sensiblement disposés horizontalement.

Selon une caractéristique de l'invention, ledit système comporte un échangeur thermique secondaire pour chauffer lesdits moyens de stockage et de restitution de la chaleur.

De plus, ledit système peut comporter une source de chaleur externe à la ladite cuve pour chauffer lesdits moyens de stockage et de restitution de la chaleur.

Selon une variante de réalisation de l'invention, ledit système comporte un échangeur thermique tertiaire pour chauffer ledit volume de stockage.

De préférence, ladite cuve est formée par une enveloppe fermée en béton recouvert par un isolant thermique.

En outre, l'invention concerne un procédé de stockage et de récupération d'énergie par air comprimé, dans lequel on réalise les étapes suivantes :
a) on comprime l'air ;
b) on stocke l'air comprimé dans un système de stockage selon l'une des revendications précédentes ; et
c) on détend l'air stocké pour générer une énergie.

Selon un mode de réalisation, on chauffe l'air stocké avant l'étape c).

Avantageusement, on génère une énergie au moyen d'au moins une turbine.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 illustre schématiquement et en coupe, un assemblage de tubes aciers droits « en fagot » dans une enveloppe isolante.
La figure 2 montre une disposition de conduites de chauffage et/ou de récupération de chaleur.
La figure 3 illustre un exemple de dimensionnement de bobines de stockage selon l'invention.
Les figures 4a à 4c montrent schématiquement des modes de réalisation de bobines à axe vertical et à axe horizontal et des dispositions d'assemblage de bobines.
La figure 5 illustre un système de stockage selon un mode de réalisation de l'invention avant remplissage d'air comprimé.
La figure 6 illustre le système de stockage du mode de réalisation de la figure 5 pendant la phase de remplissage d'air comprimé.
La figure 7 illustre le système de stockage du mode de réalisation de la figure 5 pendant la phase de soutirage de l'air comprimé.
La figure 8 illustre une première variante du système de stockage avec une source de chaleur externe, en phase de réchauffage de l'air comprimé.
La figure 9 illustre une deuxième variante du système de stockage avec un échangeur thermique secondaire, en phase de réchauffage de l'air comprimé.
La figure 10 illustre une troisième variante du système de stockage avec un échangeur thermique tertiaire, en phase de réchauffage de l'air comprimé.

### Description détaillée de l'invention

Selon l'invention, l'air à haute pression (air comprimé), par exemple entre 70 et 120 bars est stocké dans au moins un tube, notamment en métal, de préférence en acier. Les tubes en acier sont adaptés, car ils doivent résister à la pression de plusieurs certaines de bars et avoir une conductibilité thermique la plus importante possible. Dans le cas d'un stockage au moyen d'une pluralité de tubes, les tubes sont connectés, formant ainsi un assemblage de tubes. L'ensemble des tubes forme un volume de stockage d'air comprimé. Cet assemblage de tubes est confiné dans une cuve étanche, résistante à la pression et thermiquement isolante. La résistance à la pression permet de contenir la vapeur d'eau utilisée, telle que décrit dans la suite de la description. L'isolation thermique permet notamment d'éviter les pertes de chaleur vers l'extérieur. Par exemple, la cuve peut comprendre une enveloppe étanche résistant à la pression intérieure et une enveloppe isolante thermiquement pour limiter les déperditions de chaleur par rapport au milieu extérieur. L'enveloppe isolante thermiquement peut être disposée en surface ou être au moins partiellement enterrée (c'est-à-dire semi-enterrée) pour bénéficier d'un milieu plus stable en température et/ou pour des raisons esthétiques, d'environnement et de sécurité. Dans la suite de la description, l'expression assemblage de tubes couvre également le mode de réalisation, pour lequel le stockage est réalisé par un seul tube.

Ces tubes peuvent être protégés contre la corrosion en extérieur par des revêtements de polyoléfine, de polyéthylène (PE), de polypropylène (PP), et en intérieur par des revêtements en époxy.

Selon un mode de réalisation de l'invention, les tubes en métal sont préférentiellement utilisés, et sont assemblés par soudure et disposés horizontalement, en fagots, en surface. Les tubes, par exemple en acier, sont de préférence disposés horizontalement pour une plus grande facilité d'assemblage sur une plus grande longueur, et pour diminuer le nombre de bouchons d'extrémité et le nombre de raccordements entre tubes.

Pour réaliser ce système de stockage, il est possible d'utiliser, préférentiellement, des tubes pétroliers de type "sans soudure" (de type tubage ou "casing" pétrolier), ou des tubes droits soudés, avec soudures longitudinales ou en hélice, utilisés pour les pipelines de gaz, dans la limite de leur pression de service.

Les tubes, avantageusement en élément unitaire de 12-15 mètres sont assemblés et soudés préférentiellement sur le site de stockage, avec des moyens de manutention limités.

Les longueurs des tubes peuvent atteindre, plusieurs dizaines de mètres en fonction du volume d'air souhaité et de la place sur le site de stockage. Les tubes ainsi constitués sont disposés parallèlement les uns par rapport aux autres selon leur axe, puis mis en couches successives pour constituer un "fagot" de, par exemple, environ 10 tubes par rangée et environ 10 tubes en hauteur, de manière à atteindre une centaine de tubes. On appelle fagot un empilement de plusieurs rangées de tubes, chaque rangée comprenant une pluralité de tubes.

Les tubes sont raccordés entre eux par des canalisations de diamètre approprié pour les mettre en communication, en parallèle ou en série, afin d'obtenir le volume de stockage choisi. Un jeu de vanne sur ces canalisations permet d'isoler un tube, ou un ensemble de tubes.

Le "fagot" constitué est de préférence quasi-horizontal, avec cependant une légère pente pour faciliter l'écoulement des condensats.

Les tubes sont de préférence disposés horizontalement plutôt que verticalement. Horizontalement, ils permettent d'obtenir un volume de stockage plus important avec un minimum de conduites de raccordement et de bouchons aux extrémités des tubes, contrairement à la disposition verticale et partiellement enterrée, qui implique que la longueur de tube soit limitée à la profondeur de l'excavation. La multiplication des tubes verticaux augmente le nombre de bouchons d'extrémités, complique le raccordement, et augmente les coûts de l'installation.

Exemple d'ordre de grandeur :

Pour un tube en acier de diamètre extérieur de 20" (0.508 m), de diamètre intérieur 0.485 m, de longueur 10 m, et pour un fagot de 10 x 10 = 100 tubes, le poids est de 137 tonnes pour un volume d'air comprimé de 185 m³, ce qui donne un ratio m³ d'air /tonnes d'acier de 1,348, ou le ratio de 0,742 tonnes d'acier/m³ stocké. Ce calcul ne prend pas en compte les embouts d'extrémités des tubes et les moyens de raccordements entre eux. Pour cette raison, la règle préconisant "un kilo d'acier pour un litre d'air comprimé stocké", peut être appliquée.

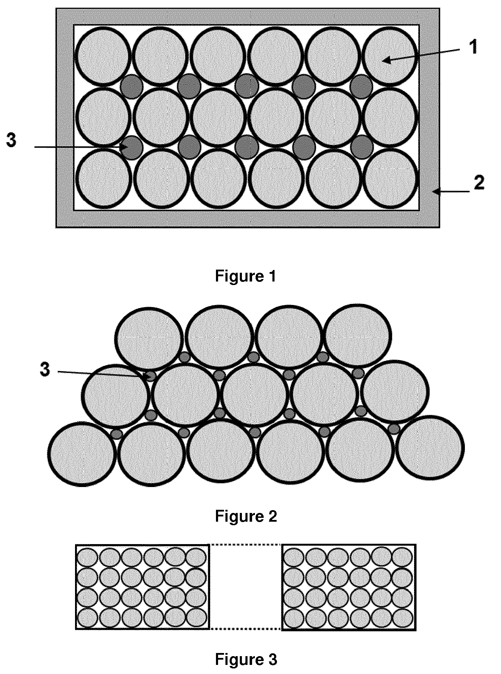

Dans une variante selon l'invention, si l'air stocké est chaud (chaleur issue de la phase de compression), l'objectif est de conserver le plus longtemps possible la chaleur de l'air comprimé dans les tubes de stockage. Pour cela, la cuve contenant les fagots de tubes droits assemblés est thermiquement isolée du milieu extérieur pour conserver la chaleur de l'air comprimé introduit dans le stockage. La figure 1 montre en coupe un fagot constitué de tubes 1 parallèles enfermés dans une enceinte 2 (c'est-à-dire une cuve qui résiste à la pression et qui est isolée) pour l'isolation thermique, environnementale et/ ou sécuritaire.

Un chauffage complémentaire de l'air, contenu dans des tubes droits horizontaux peut se faire par l'intérieur ou par l'extérieur du tube de stockage.

En outre, il y a la possibilité de disposer, dans chaque tube de stockage, un tube dit "insert" rempli d'un matériau de stockage de chaleur.

Une autre variante est d'utiliser un échangeur de chaleur composé de conduites 3 disposés dans l'espace disponible entre les tubes de stockage d'air comprimé. Les tubes sont de préférence en contact métal-métal pour faciliter le transfert de la chaleur par conduction. La figure 2 montre une autre disposition des tubes parallèles et des conduites d'échange de chaleur 3.

Le chauffage ou le maintien en température de l'air comprimé contenu dans le tube de stockage est obtenu par la circulation d'un fluide chaud (de la vapeur ou un liquide caloporteur) qui échange, par conductivité thermique de l'acier entre les deux types de tubes (tubes d'air comprimé et canalisation de fluide chaud), de la chaleur avec l'air comprimé stocké.

Un autre mode de réalisation du stockage de gaz comprimé consiste à former des bobines de tubes en acier. Les bobines sont formées de préférence, mais pas nécessairement, sur le site même compte tenu de leur encombrement : dimensions des bobines, poids, et des moyens de manutention disponibles.

La fabrication de la bobine unitaire peut être obtenue par enroulement du tube en acier, par déformation plastique de celui-ci, en couches successives sur un touret à axe horizontal ou à axe vertical. La figure 3 présente une section selon un diamètre d'une bobine unitaire.

De préférence, l'axe de la bobine est vertical.

Exemple d'ordre de grandeur :

Une bobine unitaire de stockage de diamètre maximum 15 m, de diamètre minimum 3 m, de largeur 1,5 m, avec un tube en acier de diamètre 6.625" (16 cm), d'épaisseur 6,4 mm, a un poids d'acier de 230 tonnes, et un volume de stockage de gaz de 176 m³. Le volume du cylindre constitué par une telle bobine élémentaire est de 276 m³.

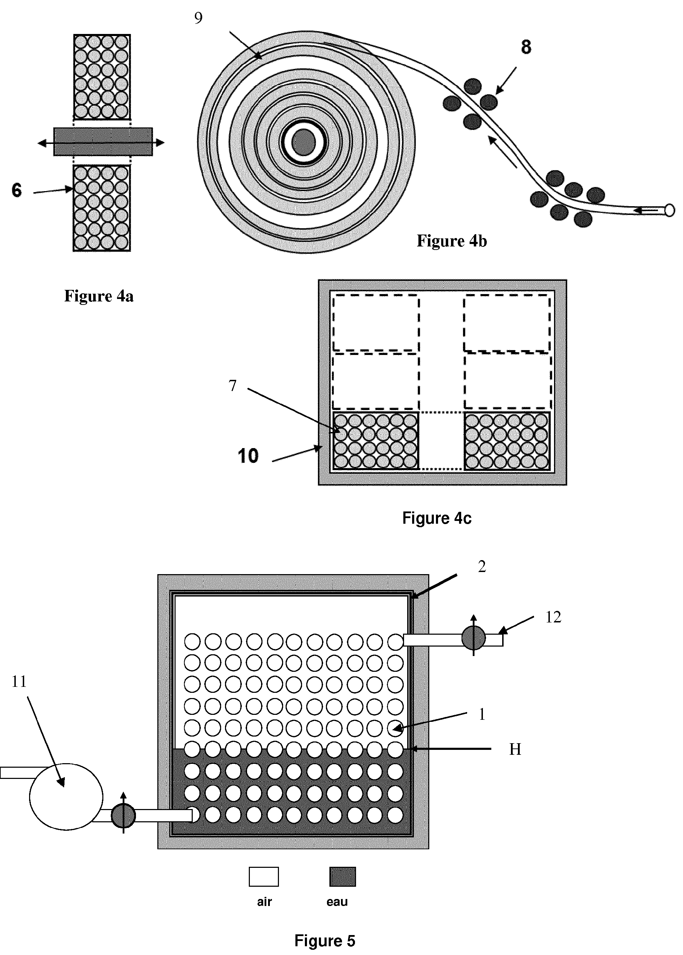

Les figures 4b et 4c montre schématiquement une bobine à axe horizontal 6 et un ensemble de bobines à axe vertical 7.

Tel qu'illustré en figure 4a, les bobines peuvent être fabriquées à partir de tronçons de tubes standards en acier de longueur unitaire 12-15m, assemblés et soudés pour constituer un tube continu qui sera ensuite cintré dans son mode plastique au moyen de galets presseurs 8 et enroulé sur un touret spécifique 9 pour constituer une bobine élémentaire, par exemple avec un volume de 276 m³.

Plusieurs bobines unitaires peuvent être superposées puis interconnectées par des conduites pour constituer un volume de stockage dans une cuve (figure 4c).

La dimension de la bobine fabriquée et donc son poids sont directement dépendants de la capacité de levage sur le site du mini CAES. Chaque élément de bobine peut être fabriqué sur place, cerclé puis retourné pour passer d'une bobine verticale (avec son axe horizontal) à une bobine horizontale (avec son axe vertical), puis positionnée, descendue et posée à plat au fond de la cuve 10 (figure 4) préalablement construite.

Une excavation pourra être réalisée pour contenir la moitié basse du touret, et ce afin d'éviter une structure en hauteur et de faciliter la mise en bobine du tube continu.

Un portique compatible avec les charges et dimensions de la bobine (par exemple avec un diamètre extérieur 15 m, une hauteur 3 m, et un poids de la bobine 230 tonnes) permet le basculement, le déplacement et la descente de la bobine dans la cuve.

Il sera possible de fabriquer des éléments de bobine de hauteur plus réduite (par exemple 2 m), tout en conservant un diamètre extérieur acceptable (par exemple 15 m), pour maintenir le volume linéaire et pour réduire la masse de l'élément fabriqué.

Les éléments de bobines peuvent être ainsi empilés les uns sur les autres et raccordés au moyen de tubes avec mise en série ou en parallèle.

Les tubes de stockage de l'air comprimé peuvent être, à la construction de la bobine, jointifs (spires jointives) ou légèrement espacés de quelques centimètres entre chaque tube, pour faciliter les échanges de chaleur entre l'acier du tube et le fluide caloporteur si l'air est stocké chaud.

Selon l'invention, afin de stocker la chaleur de l'air comprimé stocké, le système de stockage d'énergie comporte des moyens de stockage et de restitution de la chaleur de l'air comprimé. Les moyens de stockage et de restitution de la chaleur permettent de stocker la chaleur de l'air comprimé lors de la phase de stockage, car l'air comprimé est chauffé par sa compression. Les moyens de stockage et de restitution de la chaleur permettent de restituer la chaleur stockée lors du soutirage de l'air comprimé, car l'air comprimé se refroidit par sa détente en sortie du système de stockage de l'air comprimé chaud. Cette détente de l'air comprimé stocké chaud peut être réalisée au moyen d'une turbine de détente ou tout autre système, par exemple avec des pistons, permettant de convertir l'énergie stockée en énergie de rotation mécanique, voire électrique si les moyens de détente sont couplés à une génératrice électrique. Ainsi l'efficacité énergétique du système de stockage est augmentée.

Les moyens de stockage et de restitution de la chaleur comprennent de l'eau, sous forme liquide et gazeuse (vapeur d'eau) pour stocker la chaleur. Lors de la phase de stockage, l'eau sous forme liquide se vaporise, et lors de la phase de restitution, l'eau sous forme de vapeur d'eau se condense. De préférence, l'eau et la vapeur d'eau occupent, au moins partiellement, l'espace interne de la cuve 2 ayant une enveloppe isolante thermiquement. Avantageusement, l'eau et la vapeur d'eau occupent l'espace entre les tubes formant le volume de stockage d'air comprimé. Le transfert de chaleur entre l'air comprimé et l'eau et la vapeur d'eau se fait de façon directe, la conduction thermique du matériau (par exemple métal) constituant les tubes. L'énergie calorifique (ou chaleur) stockée est fonction de la chaleur sensible de l'eau (énergie de l'eau à la température de saturation) augmentée de la chaleur latente (énergie de vaporisation de l'eau). Dans la suite de la description et sur les figures, le terme « eau »désigne l'eau sous forme liquide et le terme « vapeur » désigne l'eau sous forme de vapeur d'eau.

L'utilisation d'eau et de vapeur d'eau permet d'obtenir un bon rendement thermique du stockage de l'énergie. En effet, la vapeur d'eau a des propriétés physiques particulièrement adaptées au transfert de chaleur ; en particulier, sa chaleur latente permet d'obtenir un bon rendement thermique. De plus, les cycles de stockage et de restitution de la chaleur au moyen de vapeur d'eau peuvent être rapides. En outre, la vapeur d'eau peut être utilisée pour un nombre de cycles plus élevé que les matériaux absorbeurs de chaleur qui se dégradent au cours du temps. Par ailleurs, l'eau présente l'avantage d'être chimiquement stable et de faible coût.

La cuve est prévue pour résister à la pression de la vapeur d'eau. Par exemple, la cuve peut être, préférentiellement, réalisée en béton recouvert intérieurement et/ou extérieurement d'un matériau isolant thermiquement. Ainsi, la cuve peut résister à des pressions internes élevées (pression de la vapeur d'eau), par exemple d'environ 10 bars, et à des températures élevées (température de la vapeur d'eau), par exemple d'environ 180 °C. Alternativement, la cuve étanche et résistante à la pression peut être également composée de tôle d'acier ou également de tôle d'acier renforcée en extérieur par une épaisseur de béton.

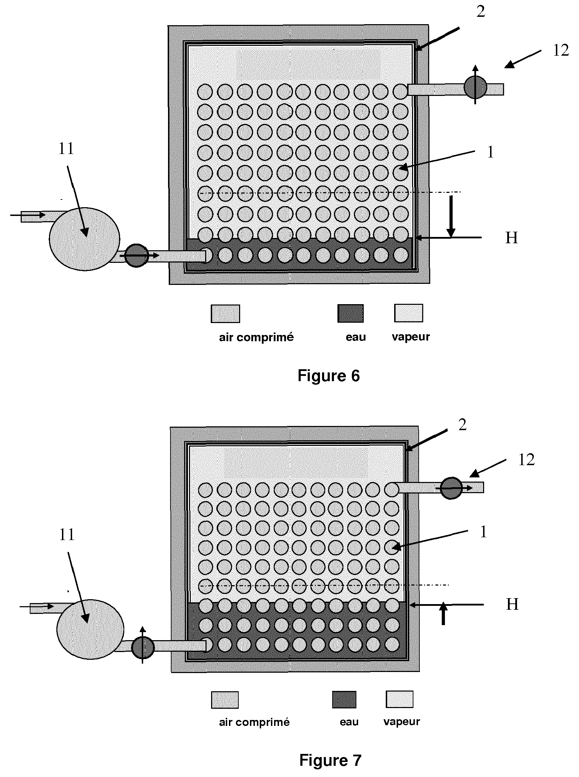

Les figures 5 à 7 illustrent un même mode de réalisation du système de stockage selon l'invention, respectivement avant le remplissage en air comprimé des tubes 1 (figure 5), lors du remplissage en air comprimé des tubes 1 (figure 6), puis lors de la restitution de l'air comprimé (figure 7).

Telle qu'illustrée à la figure 5, la cuve 2 avec son enveloppe isolante thermiquement est initialement remplie en partie d'eau, par exemple d'eau froide, avant le remplissage des tubes 1 en air comprimé chaud. L'eau occupe la partie basse de l'espace interne de la cuve 2 entre les assemblages de tubes 1, jusqu'à une hauteur H. La cuve 2 comporte dans sa partie basse des moyens d'arrivée de l'air comprimé 11, qui peuvent être raccordés (munis) à une unité de compression (compresseur) et être reliés à au moins un tube 1 de l'assemblage. En outre, la cuve 2 (l'enveloppe isolant thermiquement) comporte en partie supérieure des moyens de sortie de l'air comprimé 12, qui peuvent être raccordés à un système de détente (munis d'un détendeur) et être reliés à au moins un tube 1 de l'assemblage. Selon une variante de réalisation non représentée, le système de détente de l'air comprimé qui transforme l'énergie de compression de l'air chaud en énergie mécanique de rotation peut être un ensemble composé de turbines ou de moteurs à pistons. L'énergie de rotation produite peut être transformée en énergie électrique par une génératrice électrique.

Selon l'invention, l'air comprimé chaud en sortie d'un compresseur, par exemple à environ 400°C, est stocké dans le volume de stockage composé par des tubes 1. La chaleur ou énergie thermique entrant dans la cuve 2 est apportée par l'air comprimé chaud au travers des tubes 1 en métal. Selon une variante de réalisation de l'invention, le ou les compresseurs sont placés au plus près de la cuve 2 pour limiter les pertes thermiques dans les tubes extérieurs à la cuve. Telle qu'illustrée à la figure 6, la partie basse de la cuve 2 est initialement remplie d'eau, dans laquelle se trouve immergé en partie les tubes 1 de l'assemblage. Par la chaleur apportée, l'eau se vaporise progressivement jusqu'à obtenir un milieu eau-vapeur en équilibre de phase dépendant de la pression et de la température du milieu ; ainsi la température et la pression des deux phases eau et vapeur augmentent. Dans la cuve 2, le volume de la vapeur augmente et le volume de l'eau diminue (la hauteur d'eau H diminue) jusqu'à la charge complète en énergie thermique de la cuve 2 qui est limitée par la pression maximum de la vapeur admise par la cuve 2 de stockage.

En phase de soutirage de l'air comprimé des tubes, suivant la loi des Gaz Parfait (de Amonton qui précise que «à volume constant d'un gaz, la pression varie lorsque la température change »), la décompression de l'air dans le volume constant des tubes, produit une baisse de la température de l'air stocké. La baisse de température de l'air est compensée par la chaleur apportée par la vapeur sous pression et l'eau préalablement stockée. La vapeur cède sa chaleur latente et éventuellement une petite partie de la chaleur sensible de l'eau. Les condensats retournent en eau dans la cuve ; de ce fait le volume de l'eau dans la cuve ne varie pas durant le cycle de vaporisation - condensation, puisqu'il n'y a pas de mise à l'atmosphère de la vapeur. Telle qu'illustrée à la figure 7, lors de la phase de soutirage de l'air comprimé, la hauteur H d'eau augmente dans la cuve 2.

Selon une variante de réalisation de l'invention, le système de stockage d'énergie (sous la forme d'air comprimé chaud) peut comprendre une source de chaleur externe pour augmenter le stockage de la chaleur dans la cuve et compenser, notamment pour un stockage de longue durée, les pertes dues à une isolation imparfaite . Par exemple, le système de stockage d'énergie peut comprendre un accumulateur de vapeur disposé à l'extérieur du système de stockage d'air comprimé. L'injection de vapeur à une pression et température suffisantes dans la cuve, augmente le stockage de chaleur dans la cuve. Pour cette variante de réalisation, le volume d'eau dans la cuve à la fin du soutirage d'air comprimé, a augmenté par rapport au volume d'eau initialement présent dans la cuve. Ce volume d'eau est fonction de la quantité de vapeur injectée. Cette réserve de vapeur d'eau peut être de la vapeur fatale ou de la vapeur d'eau créée à partir de la combustion d'énergie fossile (par exemple au moyen d'un brûleur), de chaleur « perdue » issue de l'industrie (raffinerie, sidérurgie, ...), d'incinérateurs d'ordures ménagères, ou d'énergie intermittente (par exemple éolienne ou solaire). Le réservoir accumulateur de chaleur issue d'une source extérieure peut être disposé en surface ou être au moins partiellement enterré.

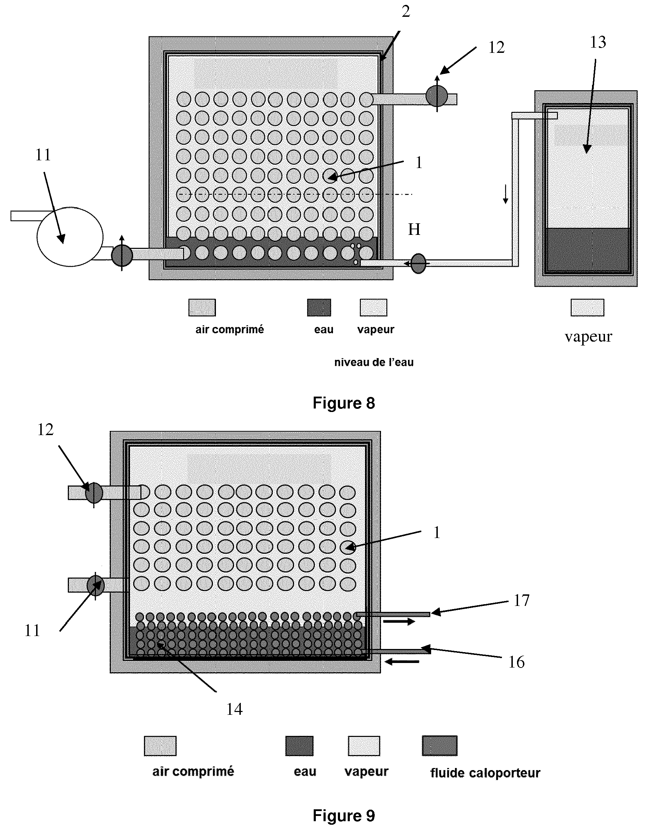

La figure 8 illustre un exemple de cette variante de réalisation, lors de la phase de stockage d'air comprimé. L'espace interne de la cuve 2 est relié à un réservoir accumulateur de chaleur 13. Le réservoir 13 comprend de l'eau et de la vapeur d'eau. La vapeur d'eau du réservoir 13 est injectée directement dans l'eau de la cuve 2, de préférence à sa base, qui est remplie d'eau. Le réservoir accumulateur de chaleur 13 permet d'augmenter le stockage de la chaleur dans la cuve 2. La figure 8 illustre également les moyens d'arrivée 11 et de sortie 12 de l'air comprimé.

Selon une variante de réalisation de l'invention, le système de stockage d'énergie peut comprendre un échangeur de chaleur entre l'eau contenue dans la cuve et un fluide caloporteur. Cet échangeur de chaleur est appelé échangeur de chaleur secondaire. L'échangeur de chaleur secondaire est disposé dans la cuve, principalement dans la partie inférieure de la cuve. Il est au moins partiellement immergé dans l'eau. Cet échangeur de chaleur secondaire peut être constitué par un ensemble de tubes, dans lequel circule le fluide caloporteur liquide. L'échangeur de chaleur secondaire permet de chauffer l'eau, ce qui permet d'augmenter le stockage de chaleur dans la cuve.

La figure 9 illustre un exemple de cette variante de réalisation lors de la phase de stockage d'air comprimé. La partie inférieure de la cuve 2, exempte de tubes 1, comporte un échangeur de chaleur secondaire 14. Un fluide caloporteur chaud (de préférence toujours en phase liquide) circule dans l'échangeur de chaleur secondaire 14, au moyen d'une entrée 16 et d'une sortie 17, et chauffe l'eau contenue dans la cuve 2. La figure 9 illustre également les moyens d'arrivée 11 et de sortie 12 de l'air comprimé.

Selon une variante de réalisation de l'invention, le système de stockage d'énergie peut comprendre un échangeur de chaleur entre l'air comprimé et un fluide caloporteur. Cet échangeur de chaleur permet de chauffer le volume de stockage d'air comprimé, c'est-à-dire les tubes. Cet échangeur de chaleur est appelé échangeur de chaleur tertiaire. L'échangeur de chaleur tertiaire peut être interne aux tubes, et peut être réalisé sous forme « d'inserts » au sein des tubes, dans lesquels le fluide caloporteur circule. Cet échangeur tertiaire permet de chauffer directement l'air comprimé, ce qui permet d'augmenter l'efficacité thermique du stockage d'énergie.

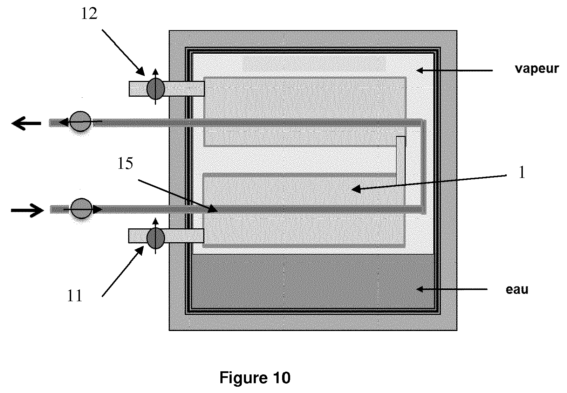

La figure 10 illustre un exemple de cette variante de réalisation. Pour des raisons de lisibilité de la figure, la figure 10 est représentée dans une direction perpendiculaire à la direction des figures 5 à 9. En outre, uniquement deux tubes 1 sont représentés. Un insert est disposé au sein des tubes 1. L'insert comporte un échangeur de chaleur tertiaire 15, dans lequel circule un fluide caloporteur chaud, qui chauffe directement l'air comprimé stocké dans les tubes 1. La figure 10 illustre également les moyens d'arrivée 11 et de sortie 12 de l'air comprimé.

En outre, selon une variante de réalisation, le système de stockage d'énergie peut comprendre un échangeur de chaleur tertiaire externe aux tubes pour chauffer l'air comprimé stocké. Les figures 1 et 2 illustrent de tels échangeurs de chaleur 3.

Selon une autre variante de réalisation non représentée, on peut également prévoir un brûleur en tant que source de chaleur externe.

Les figures 5 à 10 illustrent de manière non limitative plusieurs modes de réalisation du système de stockage selon l'invention, dans le cas où l'assemblage de tubes comprend des tubes droits réunis en fagots. Toutefois, ces modes de réalisation sont également adaptés dans le cas d'assemblage de tubes agencés sous forme de bobines, tels qu'illustrés aux figures 3 et 4.

Les différentes variantes de réalisation peuvent être combinées. Par exemple, le système de stockage d'énergie peut comprendre à la fois une source de chaleur externe, un échangeur de chaleur secondaire et un échangeur de chaleur tertiaire.

L'invention concerne en outre un procédé de stockage et de récupération d'énergie au moyen d'air comprimé. Le procédé met en oeuvre un système de stockage tel que décrit précédemment. Lors du procédé, on met en oeuvre les étapes suivantes :
- on comprime de l'air, notamment par des moyens de compression,
- on stocke l'air comprimé dans les tubes du système de stockage tel que décrit précédemment,
- on détend l'air comprimé stocké contenu dans les tubes, de manière à générer une énergie, notamment une énergie mécanique ou électrique au moyen d'une turbine.

Le procédé peut comprendre également, une étape de chauffage de l'air comprimé stocké, au moyen des systèmes de stockage selon les modes de réalisation des figures 8 à 10.

## Revendications

1. Système de stockage d'énergie sous forme d'air comprimé comprenant au moins un tube (1) formant un volume de stockage, ledit tube étant confiné dans une cuve (2) étanche, résistante à la pression et isolante thermiquement, **caractérisé en ce que** ledit système de stockage d'énergie sous forme d'air comprimé comporte des moyens de stockage et de restitution de la chaleur de l'air comprimé comprenant de l'eau et/ou de la vapeur d'eau.

2. Système selon la revendication 1, dans lequel ledit tube (1) est en métal, notamment en acier.

3. Système selon l'une des revendications précédentes, dans lequel l'eau et la vapeur d'eau desdits moyens de stockage et de restitution de la chaleur occupent au moins partiellement l'espace interne de la cuve (2).

4. Système selon l'une des revendications précédentes, dans lequel ledit système de stockage comprend un assemblage de tubes connectés pour former le volume de stockage, ledit assemblage comprenant des tubes droits (1) réunis en fagots et disposés en parallèle.

5. Système selon l'une des revendications 1 à 3, dans lequel ledit système de stockage comprend un assemblage de tubes connectés pour former le volume de stockage, ledit assemblage étant agencé sous forme d'une bobine de tubes (6, 7).

6. Système selon l'une des revendications précédentes, dans lequel ledit système de stockage est disposé en surface, ou est au moins partiellement enterré.

7. Système selon l'une des revendications précédentes, dans lequel lesdits tubes sont sensiblement disposés horizontalement.

8. Système selon l'une des revendications précédentes, dans lequel ledit système comporte un échangeur thermique secondaire (14) pour chauffer lesdits moyens de stockage et de restitution de la chaleur.

9. Système selon l'une des revendications précédentes, dans lequel ledit système comporte une source de chaleur (13) externe à la ladite cuve (2) pour chauffer lesdits moyens de stockage et de restitution de la chaleur.

10. Système selon l'une des revendications précédentes, dans lequel ledit système comporte un échangeur thermique tertiaire (15) pour chauffer ledit volume de stockage.

11. Système selon l'une des revendications précédentes, dans lequel ladite cuve (2) est formée par une enveloppe fermée en béton recouvert par un isolant thermique.

12. Procédé de stockage et de récupération d'énergie par air comprimé, dans lequel on réalise les étapes suivantes :
a) on comprime l'air ;
b) on stocke l'air comprimé dans un système de stockage selon l'une des revendications précédentes ; et
c) on détend l'air stocké pour générer une énergie.

13. Procédé selon la revendication 12, dans lequel on chauffe l'air stocké avant l'étape c).

14. Procédé selon l'une des revendications 12 ou 13, dans lequel on génère une énergie au moyen d'au moins une turbine.
